# EUROPÄISCHE PATENTSCHRIFT

(11) **EP 1 296 207 B1**
(45) Veröffentlichungstag und Bekanntmachung des Hinweises auf die Patenterteilung: **27.08.2014**
(21) Anmeldenummer: 01122932.5
(22) Anmeldetag: 25.09.2001
(51) Int. Cl.: G05B 19/042

(54) **HMI Gerät und Verfahren zur Bedienung einer technischen Einrichtung, Automatisierungssystem mit HMI Gerät und Computerprogrammprodukt mit Programm zur Durchführung des Verfahrens in einem HMI Gerät oder Automatisierungssystem**
HMI apparatus and method for operating a technical installation, automation system with HMI apparatus and computer program product with program for carrying out the method in a HMI apparatus or in an automation system
Appareil HMI et procédé de commande d'une installation technique, système d'automatisation avec cet appareil HMI et produit de programme informatique avec un programme pour la mise en oeuvre de ce procédé dans un appareil HMI ou dans un système d'automatisation

(43) Veröffentlichungstag der Anmeldung: 26.03.2003
(73) Patentinhaber: Siemens Aktiengesellschaft, 80333 München (DE)
(72) Erfinder: Melzer, Roland, 90425 Nürnberg (DE)

(56) Entgegenhaltungen:
- EP-A- 0 362 386
- EP-A- 0 424 869
- DE-A- 19 741 959
- US-A- 5 870 693

## Beschreibung

Die Erfindung betrifft ein HMI Gerät zur Bedienung zumindest einer technischen Einrichtung.

Technische Einrichtungen werden in zunehmender Weise mit Hilfe von digitalen, programmierbaren Vorrichtungen bedient, die vielfach auch ein Automatisierungssystem darstellen können bzw. ein Bestandteil eines solchen sein können. Unter technischen Einrichtungen werden dabei alle Arten von technischen Geräten und Systemen sowohl in Einzelanordnung als auch in einer z.B. über einen Feldbus datentechnisch miteinander vernetzten Anordnung verstanden. So sind unter technischen Einrichtungen z.B. im Rahmen einer industriellen Anwendung einzelnen Betriebsmittel zu verstehen, wie z.B. Antriebe, Bearbeitungsmaschinen. Als eine technische Einrichtung wird aber auch eine gesamte Produktionsanlage angesehen, bei der u.U. mit lokal verteilten Betriebsmitteln ein gesamter technischer Prozess, z.B. in einer chemischen Anlage, einer Fertigungsanlage oder verarbeitenden Anlage, ausgeführt wird.

Die zur Führung von technischen Einrichtungen eingesetzten programmierbaren Vorrichtungen weisen einen ständig zunehmenden Funktionsumfang auf. Neben der Dezentralisierung der Betriebsmittel einer solchen Vorrichtung und deren Vernetzung über Bussysteme, kommt der Bedienbarkeit der Vorrichtungen eine immer größer werdende Bedeutung zu. So können insbesondere verteilte Automatisierungssysteme spezielle Geräte aufweisen, welche die Schnittstelle zwischen einem Bediener und dem Automatisierungssystem bilden.

Solche Geräte werden allgemein als HMI Geräte bezeichnet, wobei mit HMI der Begriff "Human Machine Interface" abgekürzt wird. Weiterhin ist es übliche geworden, diese Geräteklasse als Vorrichtungen zum "Bedienen- und Beobachten" technischer Einrichtungen zu bezeichnen, abgekürzt als "B+B-Geräte". Diese Geräte, die den eigentlichen, zur unmittelbaren Steuerung einer technischen Einrichtung dienenden Geräten häufig vorgelagert sind, weisen eine zunehmende Funktionalität auf.

Einen Übersicht über den Funktionsumfang von HMI Geräten kann gewonnen werden z.B. durch Einsichtnahme von Internetdarstellungen der Siemens AG, Geschäftsbereich Automation & Drives unter http://www.ad.siemens.de/simatic/html_76/intro/hmi.htm oder http://www.ad.siemens.de/hmi/html_00/index.htm. Ferner können durch eine Aktivierung einer üblichen Internet- Suchmaschine, z.B. GOOGLE unter der Adresse http://www.google.de, z.B. durch Eingabe einer Suchfrage wie "Human Machine Interface" eine Fülle von Produkthinweisen zu HMI Geräten und Systemen aufgefunden werden.

Der Begriff HMI Gerät ist als Oberbegriff zu verstehen und umfasst alle zu dieser Gerätegruppe gehörigen Komponenten, z.B. "Operator Panels", die häufig auch abgekürzt als "OP" bezeichnet werden. HMI Geräte weisen eine zunehmende Funktionalität auf und übernehmen z.B. in einem vernetzten Automatisierungssystem Funktionen, die allgemein als Vor- und Nachbearbeitung von Daten der zu steuernden technischen Einrichtung angesehen werden können. Hierdurch wird eine zusätzliche zentrale Steuereinrichtung, z.B. eine speicherprogrammierbare Steuerung SPS, nicht nur entlastet. Vielmehr werden durch ein HMI Gerät Funktionen ermöglicht, die den Komfort und die Qualität einer Bedienung durch eine Bedienperson, d.h. insbesondere die Übersicht über die zu bedienende Einrichtung und die Fehlerfreiheit von Bedienungen, deutlich verbessern.

So stellt ein HMI Gerät in vielen Fällen zumindest ein interaktives Übersichtsbild bzw. Prozessabbild der zu bedienenden technischen Einrichtung zur Verfügung, welches mit einer speziellen Software u.U. auch direkt mit dem HMI Gerät projektiert werden kann. Hiermit wird einerseits die gezielte Vorgabe von Bedienhandlungen ermöglicht, um die technische Einrichtung in einen jeweils gewünschten Zustand zu überführen. Andererseits ist aber auch die gezielte Anzeige von Reaktionen der technischen Einrichtung möglich, meist in Form von Messwerten und Meldungen. Hiermit ist eine sichere Beobachtung des Zustandes der technischen Anlage möglich. Eine besondere Stellung nehmen dabei Störungsmeldungen ein, die einen unerwünschten Zustand der technischen Einrichtung signalisieren und in der Regel die gezielte Eingabe von Bedienhandlungen durch eine Bedienperson in das HMI Gerät zur Folge haben. Mit diesen soll das Störungsereignis der technischen Einrichtung, welches die Störungsmeldung generiert hat, so beeinflusst werden, dass die technische Einrichtung möglichst wieder einen gewünschten Zustand einnimmt.

Weiterhin ist aus dem US-Patent US 5,870,693 ein Computer mit einem Display bekannt, der zur Überwachung und Fehleranalyse mit einer eine verfahrenstechnische Anlage steuernden Speicherprogrammierbaren Steuerung (SPS) verbunden ist. Die Europäische Offenlegungsschrift EP 0 362 386 offenbart zudem eine Bedieneinheit für eine Werkzeugmaschine, wobei die Bedieneinheit zur Auswertung von Fehler-Ereignissen in der Werkzeugmaschine mit einem Expertensystem verknüpft ist, welches Vorschlage zur Ursache und Behebung eines aufgetretenen Fehlers machen kann.

Der Erfindung liegt die Aufgabe zu Grunde ein HMI Gerät und ein Verfahren zur Bedienung einer technischen Einrichtung anzugeben, die eine verbesserte Behandlung von Störungsereignissen ermöglichen. Eine weitere Aufgabe der Erfindung besteht darin, ein entsprechendes Automatisierungssystem und ein entsprechendes Computerprogrammprodukt zu schaffen.

Die der Erfindung zu Grunde liegende Aufgabe wird mit den Merkmalen der unabhängigen Patentansprüche jeweils gelöst.

Die Erfindung erlaubt mittels der vorteilhaften Attributierung eine automatisierte Zuordnung von Bedienhandlungen zu demjenigen Störungsereignis, durch dessen Auftreten die Eingabe der entsprechenden Bedienhandlungen von einem Maschinenführer in das HMI Gerät veranlaßt wurden.

Hiermit ist es im Rahmen z.B. einer Anlagenuberwachung, einer Betriebsprotokollierung bzw. auch einem Controlling des Betriebspersonals jederzeit möglich festzustellen, welche Bedienungshandlungen auf Grund des Auftretens eines Störungsereignisses in das HMI Gerät eingegeben und damit letztendlich auf die technische Einrichtung eingewirkt haben. Im Rahmen von Langzeitbeobachtungen kann ferner mit Bezug auf ein identisches Störungsereignis untersucht werden, mit welcher Folge von unterschiedlichen Bedienhandlungen die Auswirkungen des Störungsereignisses auf die technische Einrichtung schneller bzw. wirkungsvoller gedämpft oder beseitigt werden kann.

Die Aktivierung der automatischen Attributierung kann in der Praxis von einem Maschinenführer z.B. durch eine manuelle Eingabe in das HMI Gerät initiiert werden. Hierdurch wird bewirkt, dass alle folgenden Eingaben von Bedienhandlungen in das HMI Gerät automatisch dem aktuellen Störungsereignis attributiert werden. Anwendungsabhängig kann die automatischen Attributierung durch eine erneute Eingabe in das HMI Gerät wieder deaktiviert werden.

Bei einer vorteilhaften weiteren Ausführungsform der Erfindung werden gespeicherte technische Bedienhandlungen bei Detektion des attributierten, dazugehörigen Störungsereignisses automatisch ausgeführt.

Der Vorteil dieser Ausführung der Erfindung liegt darin, dass die Eignung eines HMI- Geräts zur Störungsanalyse und der darauf folgenden Störungsbehebung erheblich verbessert wird. Dies ist insbesondere beim Einsatz von HMI Geräten gemäß der Erfindung im industriellen Umfeld vorteilhaft. Hiermit kann der in der Praxis häufig auftretende Fall vermieden werden, dass in Folge eines bekannten und wiederholt auftretenden Störungsereignisses von einem Maschinenführer immer die gleichen Bedienhandlungen am HMI- Gerät durchgeführt werden müssen. Dadurch kann einerseits die Verzugszeit bis zur Generierung der störungsbeseitigenden Bedienhandlungen u.U. erheblich herabgesetzt werden. Ferner kann sichergestellt werden, dass eine bestimmte, bekannte Störung immer mit derselben Folge von Bedienhandlungen beantwortet bzw. bekämpft wird.

Im Rahmen der Erfindung wird nach einem Vergleich von generierten technischen Bedienhandlungen mit gespeicherten Bedienhandlungen eine Anfrage generiert, ob eine Freigabe der automatischen Ausführung von gespeicherten technischen Bedienhandlungen bei einer Detektion des attributierten Störungsereignisses von dem Anwender gewunscht wird, wenn die generierten Bedienhandlungen und das aktuelle Störungsereignis mit diesen korrespondieren.

Dies bietet den besonderen Vorteil, dass innerhalb eines HMI Gerats eine bedienungstechnische Reaktion auf ein Störungsereignis, welche normalerweise manuell von einem Maschinenfuhrer vorgenommen werden muss, auf Wunsch vollständig automatisiert werden kann, d.h. selbständig ablaufen kann. Hierfür sind besonders wiederkehrende Storungsereignisse geeignet, deren Auswirkungen bekannt und uberschaubar sind.

Als eines von vielen möglichen Anwendungsbeispielen dafür soll der Fall angefuhrt werden, dass in einem nicht mehr vollständig betriebssicher funktionierenden Betriebsmittel in einer technischen Einrichtung sporadisch in unregelmäßigen Zeitabstanden ein bekanntes Storungsereignis eintritt. Die wiederkehrenden, gleichen Bedienhandlungen zur Auflosung dieses Storungsereignisses konnten in diesem Fall z.B. bis zu einem Austausch des Betriebsmittels vorteilhaft automatisch ausgeführt werden.

Nach einer weiteren bevorzugten Ausführungsform der Erfindung werden technische Bedienhandlungen vorteilhaft so lange mit einem Störungsereignis attributiert, bis ein weiteres Storungsereignis detektiert wird. Zusätzlich oder alternativ können vorteilhaft auch technische Bedienhandlungen, die zeitlich zusammenhängend generiert werden, zu einem Störungsereignis attributiert werden.

Von besonderem Vorteil bei diesen Ausführungen ist es, dass die Attributierung dabei nicht nur automatisch durchgeführt, sondern auch automatische eingeleitet und beendet wird. Es sind dann keinerlei manuelle Eingriffe eines Maschinenführers mehr erforderlich.

Bei dem Computerprogrammprodukt gemäß der Erfindung handelt es sich um handelsübliche Manifestationen des Computerprogramms, das Softwaremittel zur Durchführung eines erfindungsgemäßen Verfahrens aufweist, wenn das Computerprogramm in einem HMI Gerät oder einem Automatisierungssystem ausgeführt wird. Dabei kann es sich um Fixierungen auf üblichen Datenträgern wie Disketten, CD, DVD, Festplatten, Memory sticks, Bändern u.v.m. handeln. Aber auch Dateien, die in einem Computerserver gespeichert sind, z.B. mit Hilfe des Internets downgeloaded und dann in ein HMI Gerät bzw. ein Automatisierungssystem geladen werden können, stellen Computerprogrammprodukt im Sinne der Erfindung dar.

Im Weiteren wird ein bevorzugtes Ausführungsbeispiel der Erfindung mit Bezugnahme auf die Zeichnungen näher erläutert.
Es zeigen:
- FIG 1: ein Blockdiagramm einer Ausführungsform eines erfindungsgemäßen Automatisierungssystems, das zumindest ein HMI Gerät zur Bedienung einer technischen. Einrichtung aufweist,
- FIG 2: ein kombiniertes Struktur- und Ablaufdiagramm zur Erläuterung einer bevorzugten Ausführungsform der Verarbeitungseinheit des erfindungsgemäßen HMI Geräts und des erfindungsgemäßen Verfahrens, und
- FIG 3: zeigt ein kombiniertes Struktur- und Ablaufdiagramm einer beispielhaften Ausführungsform für eine bevorzugte Funktionseinheit der Erfindung, womit eine Anfrage zur Freigabe der automatischen Ausführung von gespeicherten technischen Bedienhandlungen generierbar ist.

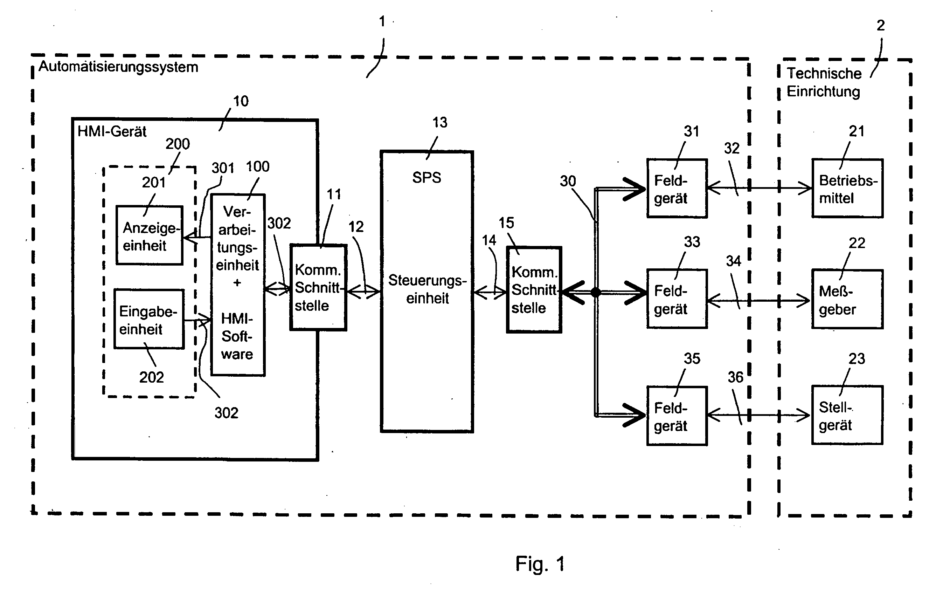

Die FIG 1 zeigt ein Blockdiagramm einer Ausführungsform eines erfindungsgemäßen Automatisierungssystems 1, das zumindest ein erfindungsgemäßes HMI Gerät 10 zur Bedienung einer technischen Einrichtung 2 aufweist. Das HMI Gerät 10 weist eine Mensch-Maschine-Schnittstelle 200 auf, die zumindest über eine Anzeigeeinheit 201, z.B. ein LCD-Display oder ein Touch Screen, und eine Eingabeeinheit 202, z.B. eine Folientastatur, Tastenfelder, Mousepads usw., verfügt.

Das HMI Gerät verfügt ferner über eine Verarbeitungseinheit 100, auf der eine HMI Software abläuft. Die HMI Software dient einerseits zur Ansteuerung von Anzeigeeinheit 201 und Eingabeeinheit 202, die über interne Datenschnittstellen 301, 302 mit der Verarbeitungseinheit 100 verbunden sind. Weiterhin hat eine HMI Software die Aufgabe anwenderspezifisch Vorund Nachbearbeitungen insbesondere von Bedienhandlungen, Messwerten und Störungsereignissen vorzunehmen.

Aus dem großen Funktionsumfang, den ein Computerprogramm von der Art einer HMI Software aufweisen kann, sollen nur einige wenige Beispiele exemplarisch dargestellt werden. So können beispielsweise Bedienhandlungen, Meßwerte und Störungsereignisse von einer HMI Software in ein interaktives Prozessabbild eingetragen und auf der Anzeigeeinheit 200 visualisiert werden. Ferner können z.B. Bedienhandlungen, Messwerte und Störungsereignisse in einer anwenderspezifischen Weise protokolliert und in geeigneten Listen für spätere Auswertungen archiviert werden. Des Weiteren kann eine HMI Software über Editoren verfügen, mit denen individuell gestaltete Prozessabbilder der zu überwachenden und zu bedienenden technischen Einrichtung projektiert werden können.

In der in FIG 1 dargestellten Ausführungsform ist das HMI Gerät 10 über eine Kommunikationsschnittstelle 11 und einen internen Datenbus 12 mit einer Steuerungseinheit 13 verbunden. Bei dieser kann es sich um eine speicherprogrammierbare Steuerung SPS handeln, welche die eigentliche Aufgabe der Führung der technischen Einrichtung 2 hat. In der Steuerungseinheit 13 können z.B. Regelalgorithmen für technische Betriebsmittel der technischen Einrichtung ausgeführt werden. Wird das Automatisierungssystem 1 zur Prozeßführung z.B. von technischen Betriebsmitteln in der chemischen Industrie eingesetzt, so können in der Steuerungseinheit 13 Rezepturverwaltungen, Chargensteuerungen u.v.m. ablaufen.

Im Beispiel der FIG 1 bildet eine weitere Kommunikationsschnittstelle 15 den Übergang zwischen dem internen Datenbus 14 am Ausgang der Steuerungseinheit 13 und einem Feldbus 30. Als Datennetze, die bis in die u.U. räumlich weit verteilte technische Einrichtung 2 reichen werden beispielsweise Bussysteme wie z.B. Feldbus, Profibus, Ethernet, Industrial Ethernet, FireWire oder auch PC-interne Bussysteme (PCI), etc. verwendet. Dieser Feldbus verbindet datentechnisch sogenannte Feldgeräte mit der Steuerungseinheit 13 und im weiteren auch mit dem HMI Gerät 10. Unter Feldgeräten werden im folgenden Peripheriegeräte wie z.B. Ein-/ Ausgabe-Baugruppen, Antriebe, Aktoren, Sensoren, Regler- oder Steuerungseinheiten jeglicher Art verstanden. Bei der in Figur 1 dargestellten Ausführungsform ist beispielsweise ein Feldgerät 31 über eine externe Datenschnittstelle 32 mit einem Betriebsmittel 21, z.B. einem Antrieb der technischen Einrichtung 2 verbunden. Entsprechend sind die Feldgeräte 33,35 über die externen Datenschnittstellen 34,36 beispielhaft mit einem Messgeber 22 bzw. einem Stellgerät 23 der technischen Einrichtung 2 verbunden.

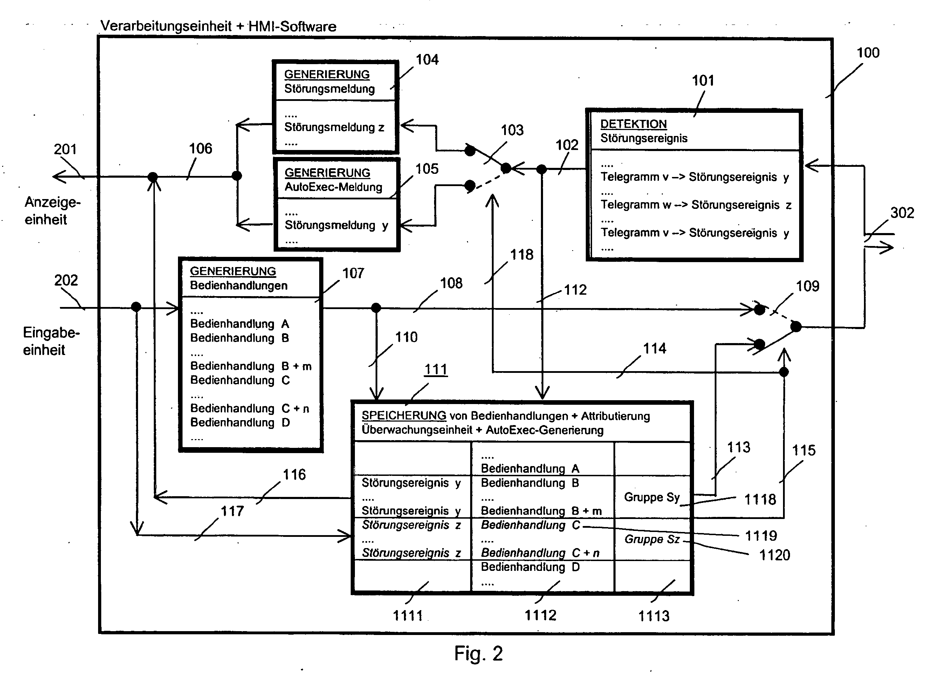

FIG 2 zeigt ein kombiniertes Struktur- und Ablaufdiagramm zur Erläuterung einer bevorzugten Ausführungsform der Verarbeitungseinheit 100 des erfindungsgemäßen HMI Geräts 10 und des erfindungsgemäßen Verfahrens.

Das HMI Gerät 10, das zur Bedienung von zumindest einer technischen Einrichtung 2 dient, weist erfindungsgemäß erste Mittel 101 zur Detektion von Störungsereignissen y,z der technischen Einrichtung 2, zweite Mittel 202,100,107 zur Generierung von technischen Bedienhandlungen A...D und dritte Mittel 111,1111,1112 zur automatischen Attributierung 1113 von generierten technischen Bedienhandlungen B...B+m,C...C+n mit den dazugehörigen Störungsereignissen y,z und automatischen Speicherung der Bedienhandlungen A...D mit den Attributierungen auf.

Der Verarbeitungseinheit 100 des HMI Geräts 10 werden im Beispiel der Figur 2 Störungsereignisse über die interne Datenschnittstelle 302 bevorzugt in Form von Daten Telegrammen zugeführt. In der Funktionseinheit 101, den ersten Mitteln erfolgt eine laufende Detektion von eintreffenden Störungsereignissen der technischen Einrichtung. Im Beispiel der Figur 2 wurden die zwei Störungsereignisse y und z in Form von dazugehörigen Daten Telegrammen v und w erfasste. Die Störungsereignisse werden im Ausführungsbeispiel der FIG 2 über eine Datenweiterleitung 102 und eine Auswahleinheit 103, dessen Wirkungsweise nachfolgend noch näher erläutert werden wird, den Funktionseinheiten 104, 105 zugeführt. Diese generieren Störungsmeldungen, die über eine weitere Datenweiterleitung 106 der Anzeigeeinheit 201 zugeführt und dort zur ausgegeben werden. Dabei generiert die Funktionseinheit 104 eine zum Störungsereignis z gehörige Störungsmeldung z und die Funktionseinheit 105 eine Störungsmeldung y zum Störungsereignis y. Die Unterschiede in der Wirkungsweise der Funktionseinheiten 104,105 werden nachfolgend noch näher erläutert werden.

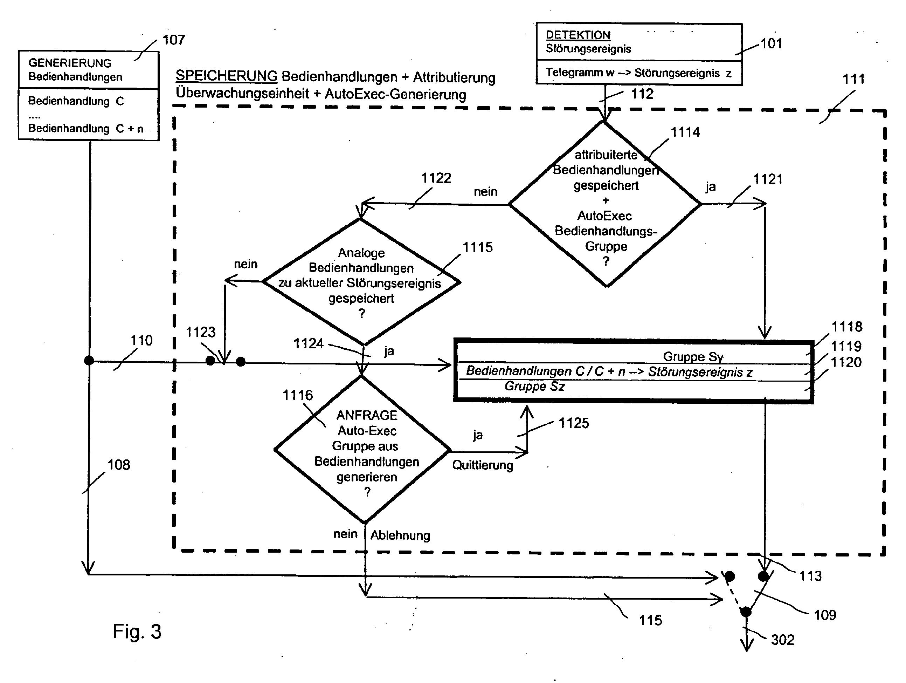

Vorteilhaft sind die bereits beschriebenen Funktionseinheiten, Auswahleinheiten, Datenweiterleitungen, sowie alle entsprechenden und weiteren Einheiten, die bei der weiteren Erläuterung von Figur 2 und 3 noch angesprochen werden, Bestandteil einer HMI Software und somit bevorzugt programmtechnisch ausgeführt. Bei einer solchen HMI Software kann es sich beispielsweise um die Programme WinCC oder UTAH der Firma Siemens AG handeln. Derartige HMI Computerprogramme werden in einem HMI Gerät oder einem Automatisierungssystem ausgeführt und sind im Handel in Form von üblichen Computerprogrammprodukten erhältlich, wie z.B. Programm- CD's, Disketten, über das Internet downloadbaren Programmfiles u.v.m..

Werden im Anschluss an eine Störungsmeldung von einer Bedienperson über die Eingabeeinheit 202 Bedienungen vorgenommen, so werden aus diesen in der als zweite Mittel dienenden Funktionseinheit 107 technischen Bedienhandlungen generiert. Diese werden über eine Datenweiterleitung 108 und eine weitere Auswahleinheit 109, dessen Wirkungsweise ebenfalls nachfolgend noch näher erläutert werden wird, der internen Datenschnittstelle 302 zugeführt. Von dort gelangen diese über den internen Datenbus 12 in die Steuerungseinheit 13, welche hieraus entsprechende Zustandsänderungen bei den jeweils betroffenen Feldgeräten auslöst.

Im Beispiel der FIG 2 generiert die Funktionseinheit 107 einzelne Bedienhandlungen A bzw. D, eine erste Gruppe von zusammengehörigen Bedienhandlungen B bis B + m und eine zweite Gruppe von zusammengehörigen Bedienhandlungen C bis C + n. Für die weiteren Erläuterungen sei angenommen, dass es sich bei A und D um quasi spontane Bedienhandlungen einer Bedienperson handelt, während die erste Gruppe von Bedienhandlungen B bis B + m in Folge des Störungsereignisses y und die zweite Gruppe von Bedienhandlungen C bis C + n in Folge des Störungsereignisses z vorgenommen wurden. Mit Hilfe dieser Bedienhandlungsgruppen sollen die Auswirkungen der Störungsereignisse auf die technische Einrichtung möglichst beseitigt, bzw. zumindest begrenzt werden.

Diese Bedienhandlungen werden über eine Datenweiterleitung 110 einer als dritte Mittel dienenden Funktionseinheit 111 zugeführt, während dieser über eine weitere Datenweiterleitung 112 auch die aktuellen Störungsereignisse von der Funktionseinheit 101 zugeführt werden. Diese Funktionseinheit 111 bewirkt die erfindungsgemäße automatische Attributierung von generierten technischen Bedienhandlungen mit den dazugehörigen Störungsereignissen und die automatische Speicherung der Bedienhandlungen mit deren Attributierungen.

Im Beispiel der Figur 2 weist die Funktionseinheit 111 die Bezeichnung "SPEICHERUNG von Bedienhandlungen + Attributierung, Überwachungseinrichtung + AutoExec-Generierung" auf. Dort sind beispielhaft die eine erste Gruppe bildenden Bedienhandlungen B bis B + m mit dem dazugehörigen Störungsereignis y und die eine zweite Gruppe bildenden Bedienhandlungen C bis C + n mit dem dazugehörigen Störungsereignis z automatische attributiert und bevorzugt in Form von Bedienhandlungs- Störungsereignisgruppen "Gruppe Sy" und "Gruppe Sz" gespeichert.

Neben den Bedienhandlungs-Störungsereignisgruppen Sy, Sz werden alle Bedienhandlungen des Bedieners aufgezeichnet, z.B. um die Funktionalität "Rückgängig" UNDO zu ermöglichen. Vorteilhaft werden dabei nicht nur die Tastenbedienungen oder Mausclicks des Bedieners aufgezeichnet, sondern vorteilhaft die damit ausgeführten Funktionen des HMI- Geräts bzw. der HMI Software, wie z.B. Bildanwahl an der Anzeigeeinheit, Eingabe Variablenwert an der Eingabeeinheit und vieles mehr.

Gemäß einer vorteilhaften, weiteren Ausführung der Erfindung können gespeicherte technische Bedienhandlungen bei Detektion des attributierten, dazugehörigen Störungsereignisses auch automatisch ausgeführt werden.

Wird von der Funktionseinheit 101 ein Störungsereignis zum wiederholten Male detektiert, in Figur 2 tritt z.B. das Telegramm v ein zweites Mal auf, so dass auch das Störungsereignis y ein zweites Mal detektiert wird, so können auf Wunsch des Anwenders die dazugehörigen, gespeicherten technischen Bedienhandlungen B bis b + m auch automatisch ausgeführt werden. In diesem Fall würden die Auswahleinheiten 103, 109 über die Datenweiterleitungen 115,118 von der Funktionseinheit 111 gesteuert in den strichliert dargestellten Zustand überführt werden. Dies hat einerseits zur Folge, dass nicht aktuelle Bedienhandlungen von der Funktionseinheit 107 über die Datenweiterleitung 108, sondern die Bedienhandlungs-Gruppe Sy über die Datenweiterleitung 113 an die Datenschnittstelle 302 automatisch ausgegeben werden. Zur Information des Benutzers über diese Ereignisse wird über die Funktionseinheit 105 eine als "AutoExec-Meldung" bezeichnete besondere Störungsmeldung y an die Anzeigeeinheit 201 ausgegeben.

Bei einer besonders vorteilhaften weiteren Ausführung der Erfindung erfolgt zusätzlich ein Vergleich von aktuell generierten technischen Bedienhandlungen mit gespeicherten Bedienhandlungen und eine Generierung einer Anfrage auf Freigabe der automatischen Ausführung von gespeicherten technischen Bedienhandlungen bei einer Detektion des attributierten Störungsereignisses, wenn die generierten Bedienhandlungen und das aktuelle Störungsereignis mit diesen korrespondieren.

Diese Ausführung hat den besonderen Vorteil, dass eine höhere Effizienz bei der Bedienung insbesondere von wiederkehrenden Störungsereignissen bewirkt werden kann. Hierzu werden in der HMI Software die Bedienhandlungen des Bedieners, die nach auftretenden Störungsereignissen erfolgen, im Hintergrund aufgezeichnet. Wird in der Funktionseinheit 111 festgestellt, dass zu einem Störungsereignis mehrfach die gleichen Bedienhandlungen durchgeführt werden, wird dies dem Bediener mitgeteilt. Bevorzugt schlägt die HMI Software in der Verarbeitungseinheit in diesem Fall dem Bediener vor, diese Bedienhandlung in Zukunft selbständig durchzuführen. Bestätigt der Bediener dies, wird die Störungsbehebung in Zukunft von dem HMI- Gerät selbständig durchgeführt. Besonders vorteilhaft ist es hierbei, dass die HMI Software von sich aus vorschlägt, wiederkehrende Bedienhandlungen des Bedieners zukünftig selbständig auszuführen.

Wird im Beispiel der FIG 2 von einer Überwachungseinrichtung in der Funktionseinheit 111 z.B. festgestellt, dass
1. das Störungsereignis z von der Funktionseinheit 101 detektiert wurde und dass
2. von einem Bediener über die Funktionseinheit 107 Bedienhandlungen C ... C+n generiert wurden, welche
3. zumindest teilweise mit den in der Funktionseinheit 107 gespeicherten und mit dem Störungsereignis z attributierten Bedienhandlungen aus der zusammengehörigen "Gruppe Sz" der Bedienhandlungen C bis C + n übereinstimmen,
so wird eine Anfrage auf Freigabe der automatischen Ausführung der in 111 gespeicherten technischen Bedienhandlungen C...C+n generiert. Dies geschieht vorteilhaft durch Ausgabe einer entsprechenden Anfrage über eine Datenweiterleitung 116 an die Anzeigeeinheit 201. Wird die Anfrage vom Bediener positiv quittiert, so wird über die Datenweiterleitung 117 die automatische Ausführung der dazugehörigen Bedienhandlungen C bis C +n, d.h. die Gruppe Sz, über die Datenweiterleitung 113 aktuelle und/oder zukünftig, d.h. bei einem erneuten Auftreten des attributierten Störungsereignisses freigegeben.

Vorteilhaft sind die dritten Mittel 111 des HMI Geräts 10 so ausgelegt, dass diese technische Bedienhandlungen so lange mit einem Störungsereignis attributieren, bis ein weiteres Störungsereignis detektiert wird. Bei eine weiteren Ausführung des HMI Geräts 10 können die dritten Mittel 111 auch so gestaltet sein, dass diese technische Bedienhandlungen, die zeitlich zusammenhängend generiert werden, zu einem Störungsereignis attributieren. Mit diesen Weiterbildungen der Erfindung können zusammenhängende und zu einem Störungsereignis gehörigen Mengen von Bedienungshandlungen automatisch gruppiert werden.

FIG 3 zeigt ein kombiniertes Struktur- und Ablaufdiagramm einer beispielhaften Ausführungsform für eine bevorzugte Funktionseinheit 111 der Erfindung, womit eine Anfrage zur Freigabe der automatischen Ausführung von gespeicherten technischen Bedienhandlungen generierbar ist.

Im Beispiel der Figur 3 wird einerseits von der Funktionseinheit 101 ein Störungsereignis z detektiert und dies über die Datenweiterleitung 112 der Funktionseinheit 111 mitgeteilt. Weiterhin ist angenommen, dass von einem Bediener auf Grund des Störungsereignisses z über die Funktionseinheit 107 Bedienhandlungen C bis C + n veranlasst werden und diese über die Datenweiterleitung 110 der Funktionseinheit 111 mitgeteilt werden bzw. über die Datenweiterleitung 108 bis zur Auswahleinheit 109 weitergeleitet werden.

Die Funktionseinheit 101 weist eine erste Abfrageeinheit 1114 auf. Diese prüft, ob zum aktuellen Störungsereignis z bereits attributierte Bedienhandlungen gespeichert sind und ob eine automatische Ausführung dieser Bedienhandlungen freigegeben ist, d.h. eine AutoExec Bedienhandlungsgruppe vorhanden ist.

Im Beispiel der Figur 3 sei angenommen, dass zunächst nur für ein Störungsereignis y eine attributierte und zur automatischen Ausführung freigegebene AutoExec "Gruppe Sy" 1118 gespeichert sei. In einem solchen Fall würde bei einem Auftreten des Störungsereignisses y die automatische Ausführung der Gruppe Sy über die Datenweiterleitungen 1121, 113 und die Auswahleinheit 109 aktiviert werden.

Im Beispiel der Figur 3 sei angenommen, dass zu dem aktuellen Störungsereignis z noch keine Freigabe für eine automatisch Ausführung von attributierten Bedienhandlungen vorliegt. In einer zweiten Abfrageeinheit 1115 wir daraufhin überprüft, ob zumindest mit dem aktuellen Störungsereignis z attributierte und mit zumindest einem der aktuell vorliegenden Bedienhandlungen C bis C + n übereinstimmenden Bedienhandlungen gespeichert sind. Im Negativfall "nein" würden dann die aktuellen Bedienhandlungen C bis C + n über die Datenweiterleitung 110 und eine Freigabeeinheit 1123 der Funktionseinheit 111 zum Zwecke der Speicherung und Attributierung mit dem Störungsereignis z zugeführt werden. Dies ist in Figur 3 durch einen entsprechenden Eintrag in der Zelle 119 dargestellt.

Im Positivfall "ja", d.h. bei Vorhandensein von bereits gespeicherten Bedienhandlungen, die also mit dem Störungsereignis z attributiert und mit den aktuellen Bedienhandlungen zumindest teilweise identisch sind, würde über eine dritte Abfrageeinheit 1116 eine Anfrage an den Benutzer generiert werden. Wird die Anfrage von einem Benutzer mit einem "ja" quittiert, so wird eine AutoExec "Gruppe Sz" der Bedienhandlungen C bis C +n angelegt. Dies ist in Figur 2 durch die Datenweiterleitung 1125 und die Zelle 1120 dargestellt. Falls das Störungsereignis z in Zukunft erneut auftreten sollte, so würde dann die automatische Ausführung dieser Gruppe Sz von zusammengehörigen Bedienhandlungen über die erste Abfrageeinheit 1114 und die Datenweiterleitung 1121 vom HMI Gerät bzw. der HMI Software freigegeben werden.

Falls die Anfrage jedoch von einem Bediener mit "nein" abgelehnt werden würde, so würde über eine Datenweiterleitung 115 die Auswahleinheit 109 so beeinflusst werden, dass die aktuell vorliegenden Bedienhandlungen C bis C + n von der Funktionseinheit 107 unter Umgehung der Funktionseinheit 111 über die interne Datenschnittstelle 302 ausgegeben werden würden.

## Patentansprüche

1. HMI Gerät (10) zur Bedienung zumindest einer technischen Einrichtung (2), mit einer Eingabeeinheit (202), sowie mit
a. ersten Mitteln (101) zur Detektion von Störungsereignissen (y,z) der technischen Einrichtung (2), und
b. zweiten Mitteln (202,107) zur Generierung von technischen Bedienhandlungen (A...D) aus im Anschluss an ein Störereignis (y, z) von einer Bedienperson über die Eingabeeinheit (202) vorgenommenen Bedienungen, wobei die technischen Bedienhandlungen (A...D) zur Weiterleitung an eine Steuerungseinheit (13) vorgesehen sind,
**dadurch gekennzeichnet,**
**dass** das HMI Gerät (10) weiterhin umfasst:
c. dritte Mittel (111,1111,1112) zur automatischen Attributierung (1113) von generierten technischen Bedienhandlungen (B...B+m, C...C+n) mit den dazugehörigen Störungsereignissen (y,z) und automatischen Speicherung der Bedienhandlungen (A...D) mit den Attributierungen, sowie
d. fünfte Mittel zum
i. Vergleich (111,1114) von generierten technischen Bedienhandlungen (107,C...C+n) mit gespeicherten Bedienhandlungen (111,1117,C...C+n), und zur
ii. Generierung einer Anfrage (116,1116) auf Freigabe einer automatischen Ausführung von gespeicherten technischen Bedienhandlungen (111,C...C+n) bei einer Detektion des attributierten Störungsereignisses (z), wenn die generierten Bedienhandlungen (107,C...C+n) und das aktuelle Störungsereignis (z) mit diesen korrespondieren.

2. HMI Gerät (10) nach Anspruch 1, mit vierte Mitteln (109, 111,113,115) zur automatischen Ausführung von gespeicherten technischen Bedienhandlungen (B...B+m) bei Detektion des dazugehörigen, attributierten Störungsereignisses (y).

3. HMI Gerät (10) nach Anspruch 1 oder 2, wobei die dritten Mittel (111) technische Bedienhandlungen so lange mit einem Störungsereignis attributieren, bis ein weiteres Störungsereignis detektiert wird.

4. HMI Gerät (10) nach Anspruch 1, 2 oder 3, wobei die dritten Mittel (111) technische Bedienhandlungen, die zeitlich zusammenhängend generiert werden, zu einem Störungsereignis attributieren.

5. Automatisierungssystem (1) mit mindestens einer Steuerungseinheit (13), die auf eine technische Einrichtung (2) einwirkt und an die mindestens ein HMI Gerät (10) nach einem der vorangegangenen Anspruche geschaltet oder in diese integriert ist.

6. Verfahren zur Bedienung einer technischen Einrichtung (2), mit folgenden Schritten :
a. laufende Detektion von Störungsereignissen (y,z) der technischen Errichtung (2),
b. Generierung von technischen Bedienhandlungen (A...D) aus im Anschluss an ein Störereignis (y, z) von einer Bedienperson über die Eingabeeinheit (202) vorgenommenen Bedienungen, wobei die technischen Bedienhandlungen (A...D) an eine Steuerungseinheit (13) weitergeleitet werden,
c. automatische Attributierung (1113) der generierten technischen Bedienhandlungen (B...B+m,C...C+n) mit den dazugehörigen Störungsereignissen (y,z), und
d. automatische Speicherung von Bedienhandlungen (A...D) mit deren Attributierungen,
wobei das Verfahren weiterhin die Schritte umfasst:
i. Vergleich (1114,115) von generierten technischen Bedienhandlungen (107,C...C+n) mit gespeicherten Bedienhandlungen (1117,C...C+n), und
ii. Generierung einer Anfrage (1116) auf Freigabe einer automatischen Ausführung von gespeicherten technischen Bedienhandlungen (1117,C...C+n) bei einer Detektion des attributierten Störungsereignisses (z), wenn die generierten Bedienhandlungen (107,C...C+n) und das aktuelle Störungsereignis (z) mit diesen korrespondieren.

7. Verfahren nach Anspruch 6, wobei gespeicherte technische Bedienhandlungen (B...B+m) bei Detektion des attributierten, dazugehörigen Störungsereignisses (y) automatisch ausgeführt werden.

8. Verfahren nach Anspruch 6 oder 7, wobei technische Bedienhandlungen so lange mit einem Störungsereignis attributiert werden, bis ein weiteres Störungsereignis detektiert wird.

9. Verfahren nach Anspruch 6, 7 oder 8, wobei technische Bedienhandlungen, die zeitlich zusammenhängend generiert werden, zu einem Störungsereignis attributiert werden.

10. Computerprogrammprodukt mit einem Computerprogramm, das Softwaremittel zur Durchführung eines Verfahrens nach einem der vorhergehenden Ansprüche 6 bis 9 aufweist, wenn das Computerprogramm in einem HMI Gerät oder einem Automatisierungssystem ausgeführt wird.

## Claims

1. HMI apparatus (10) for operating at least one technical installation (2), having an input unit (202) and having
a. first means (101) for detecting disturbance events (y, z) in the technical installation (2), and
b. second means (202, 107) for generating technical operating actions (A...D) from operations performed by an operator after a disturbance event (y, z) via the input unit (202), the technical operating actions (A...D) being intended to be forwarded to a control unit (13),
**characterized in that**
the HMI apparatus (10) also comprises:
c. third means (111, 1111, 1112) for automatically attributing (1113) generated technical operating actions (B...B+m, C...C+n) with the associated disturbance events (y, z) and automatically storing the operating actions (A...D) with the attributions, and
d. fifth means for
i. comparing (111, 1114) generated technical operating actions (107, C...C+n) with stored operating actions (111, 1117, C...C+n) and for
ii. generating a request (116, 1116) for release of automatic execution of stored technical operating actions (111, C...C+n) in the event of detection of the attributed disturbance event (z) if the generated operating actions (107, C...C+n) and the current disturbance event (z) correspond thereto.

2. HMI apparatus (10) according to Claim 1, having fourth means (109, 111, 113, 115) for automatically executing stored technical operating actions (B...B+m) in the event of detection of the associated attributed disturbance event (y).

3. HMI apparatus (10) according to Claim 1 or 2, the third means (111) attributing technical operating actions with a disturbance event until a further disturbance event is detected.

4. HMI apparatus (10) according to Claim 1, 2 or 3, the third means (111) attributing technical operating actions, which are generated in a temporally contiguous manner, to a disturbance event.

5. Automation system (1) having at least one control unit (13) which acts on a technical installation (2) and to which at least one HMI apparatus (10) according to one of the preceding claims is connected or in which said apparatus is integrated.

6. Method for operating a technical installation (2), having the following steps:
a. disturbance events (y, z) in the technical installation (2) are continuously detected,
b. technical operating actions (A...D) are generated from operations performed by an operator after a disturbance event (y, z) via the input unit (202), the technical operating actions (A...D) being forwarded to a control unit (13),
c. the generated technical operating actions (B...B+m, C...C+n) are automatically attributed (1113) with the associated disturbance events (y, z), and
d. operating actions (A...D) are automatically stored with their attributions,
the method also comprising the following steps:
i. generated technical operating actions (107, C...C+n) are compared (1114, 115) with stored operating actions (1117, C...C+n), and
ii. a request (1116) for release of automatic execution of stored technical operating actions (1117, C...C+n) upon detection of the attributed disturbance event (z) is generated if the generated operating actions (107, C...C+n) and the current disturbance event (z) correspond thereto.

7. Method according to Claim 6, stored technical operating actions (B...B+m) being automatically executed upon detection of the attributed associated disturbance event (y).

8. Method according to Claim 6 or 7, technical operating actions being attributed with a disturbance event until a further disturbance event is detected.

9. Method according to Claim 6, 7 or 8, technical operating actions, which are generated in a temporally contiguous manner, being attributed to a disturbance event.

10. Computer program product having a computer program which has software means for carrying out a method according to one of the preceding Claims 6 to 9 if the computer program is executed in an HMI apparatus or an automation system.

## Revendications

1. Appareil HMI (10) pour commander au moins un équipement technique (2), comportant une unité de saisie (202) ainsi que :
a. des premiers moyens (101) pour la détection d'événements perturbateurs (y, z) de l'équipement technique (2) et
b. des deuxièmes moyens (202, 107) pour générer des actions de commande techniques (A ... D) à partir de commandes opérées par un opérateur via l'unité de saisie (202) à la suite d'un événement perturbateur (y, z), les actions de commande techniques (A ... D) étant prévues pour être retransmises à une unité de commande (13),
**caractérisé en ce que** l'appareil HMI (10) comprend en outre :
c. des troisièmes moyens (111, 1111, 1112) pour l'attribution automatique (1113) d'actions de commande techniques générées (B ... B+m, C ... C+n) aux événements perturbateurs associés (y, z) et pour le stockage automatique des actions de commande (A ... D) avec les attributions, ainsi que
d. des cinquièmes moyens pour
i. comparer (111, 1114) des actions de commande techniques générées (107, C ... C+n) avec des actions de commande stockées (111, 1117, C ... C+n) et pour
ii. générer une requête (116, 1116) en vue de l'autorisation d'une exécution automatique d'actions de commande techniques stockées (111, C ... C+n) lors d'une détection de l'événement perturbateur attribué (z) lorsque les actions de commande générées (107, C ... C+n) et l'événement perturbateur actuel (z) y correspondent.

2. Appareil HMI (10) selon la revendication 1, comportant des quatrièmes moyens (109, 111, 113, 115) pour l'exécution automatique d'actions de commande techniques stockées (B ... B+m) à la détection de l'événement perturbateur attribué associé (y).

3. Appareil HMI (10) selon la revendication 1 ou 2, les troisièmes moyens (111) attribuant des actions de commande techniques à un événement perturbateur jusqu'à la détection d'un autre événement perturbateur.

4. Appareil HMI (10) selon la revendication 1, 2 ou 3, les troisièmes moyens (111) attribuant à un événement perturbateur des actions de commande techniques qui sont générées de manière contiguë dans le temps.

5. Système d'automatisation (1) comportant au moins une unité de commande (13) qui agit sur un équipement technique (2) et à laquelle est connecté ou intégré au moins un appareil HMI (10) selon l'une des revendications précédentes.

6. Procédé de commande d'un équipement technique (2) comportant les étapes suivantes :
a. détection continue d'événements perturbateurs (y, z) de l'équipement technique (2),
b. génération d'actions de commande techniques (A ... D) à partir de commandes opérées par un opérateur via l'unité de saisie (202) à la suite d'un événement perturbateur (y, z), les actions de commande techniques (A ... D) étant retransmises à une unité de commande (13),
c. attribution automatique (1113) des actions de commande techniques générées (B ... B+m, C ... C+n) aux événements perturbateurs associés (y, z) et
d. stockage automatique d'actions de commande (A ... D) avec leurs attributions,
le procédé comprenant en outre les étapes suivantes :
i. comparaison (1114, 115) d'actions de commande techniques générées (107, C ... C+n) avec des actions de commande stockées (1117, C ... C+n) et
ii. génération d'une requête (1116) en vue de l'autorisation d'une exécution automatique d'actions de commande techniques stockées (1117, C ... C+n) lors d'une détection de l'événement perturbateur attribué (z) lorsque les actions de commande générées (107, C ... C+n) et l'événement perturbateur actuel (z) y correspondent.

7. Procédé selon la revendication 6, des actions de commande techniques stockées (B ... B+m) étant exécutées automatiquement à la détection de l'événement perturbateur associé attribué (y).

8. Procédé selon la revendication 6 ou 7, des actions de commande techniques étant attribuées à un événement perturbateur jusqu'à la détection d'un autre événement perturbateur.

9. Procédé selon la revendication 6, 7 ou 8, des actions de commande techniques qui sont générées de manière contiguë dans le temps étant attribuées à un événement perturbateur.

10. Produit de programme informatique comportant un programme informatique qui présente des moyens logiciels permettant d'exécuter un procédé selon l'une des revendications précédentes 6 à 9 lorsque le programme informatique est exécuté dans un appareil HMI ou un système d'automatisation.
